# EUROPEAN PATENT APPLICATION

(11) **EP 0 619 166 A1**
(43) Date of publication of application: **12.10.1994**
(21) Application number: 94104865.4
(22) Date of filing: 28.03.1994
(51) Int. Cl.: B25J 15/02

(54) **Pneumatically actuated gripping device**

(30) Priority: 05.04.1993 IT MI930260 U
(71) Applicant: UNIVER S.p.A., I-20128 Milano (IT)
(72) Inventor: Migliori, Luciano, Milano 2 (Milano) (IT)
(74) Representative: Coloberti, Luigi

(57) **Abstract**

In a pneumatically actuated gripping device, a pair of gripping members (22, 23) are pivotally hinged to spaced apart support members (28, 29) removably connected to the body of a pneumatic control cylinder (10). The piston-rod (16) of the control cylinder (10) is provided with a cilindrical rack portion (19) engaging a pinion rack sector (20, 21) coaxially arranged to a pivot pin (26, 27) at the hinging end of each gripping member (22, 23).

## Description

The present invention relates to a dismountable gripping device or mechanical hand for manipulators or robots, of the type comprising opposed gripping members which are reciprocable by a pneumatic cylinder to be moved from an open condition to a partially or totally closed condition for grip and release objects to be moved by the manipulator provided with the same gripping device.

The use of manipulators having mechanical pliers for gripping and manipulating objects is a very common practice in many industrial fields due to their greater ability to effectively and safely operate as a replacement for a human operator.

Nevertheless traditional mechanical pliers are fixedly mounted on the manipulator and must be especially designed and manufactured for a specific or intended uses and generally have a somewhat complex structure, which is difficult to modify or adapt for different uses other than those originally foreseen. Furthermore prior known gripping devices must be suitably assembled by a skilled operator before being mounted on a manipulator or robot device.

It would therefore be desirable to have a mechanical gripping device which is easy to manufacture from standard component parts which can easily be assembled and disassembled by the same user when required in order to provide pliers having different features without disassembling the entire gripping device.

Therefore the object of the present invention is to provide a mechanical gripping device, pneumatically actuated, consisting of few and easily assemblable parts enabling the use of standardised components.

A further object of the present invention is to provide a pneumatically actuated gripping device of the abovementioned kind, which has relatively small overall dimensions and which at the same time has a high gripping capability within a wide range, which can reach or even exceed an angle of 60°.

A further object of the present invention is to provide a gripping device having oscillating jaw members to provide a gripping force of substantially constant value, independently of the angular position assumed by the same jaws and of the dimensions of the objects to be gripped or manipulated.

The abovementioned objects are achieved by means of a mechanical gripping device, according to Claim 1, of the type comprising opposed gripping members, which are actuated by a pneumatic control cylinder to rotate between an open and a closed condition, wherein the gripping members are hinged and guided by lateral supporting plates removably attached to the body of the control cylinder. The gripping members at their pivoting end are provided with a pinion gear sector which engages a circular rack portion centrally arranged and simply screwed to the piston rod of the control cylinder.

The particular configuration of the gripping members and their hinging also enable appropriate extensions to be attached, or the gripping members themselves to be rapidly disassembled and replaced in order to adapt the gripping device to different working conditions for a different use.

In this way a mechanical gripping device is obtained which can be marketed in the form of a kit unit consisting of standardised components which can be easily assembled and disassembled when required by the user himself, also using standard cylinders already available on the market.

A particular embodiment of a mechanical gripping device according to the present invention will be described hereinunder with reference to the accompanying drawing, in which:
- Fig. 1: is a longitudinal sectional view of the gripping device, with the jaw members in an open condition;
- Fig. 2: is a sectional view similar to the Figure 1, with the jaw members in a closed condition;
- Fig. 3: is a top view of the gripping device.

As shown in the figures, the gripping device substantially comprises a pneumatic cylinder body 10 having a drive piston 11 which moves reciprocatingly in the chamber 12 of the cylinder.

The reciprocating movement of the piston 11 is obtained by feeding and discharging pressurised air from the inlet ports 13 and 14, while a reaction spring 15, inside the cylinder 10, tends to push the piston 11 back in the absence of pressurised air for safety reasons.

Connected to the piston 11 there is a piston rod 16 sealingly protruding from one end of the body 10 of the cylinder. The piston rod 16 at its outer end has a threaded axial hole 17 into which is screwed the threaded shank 18 of a circular rack member 19 coaxially arranged to the rod 16. The use of a circular rack, simply screwed, proves to be extremely useful since it does not require any specific angular positioning and adjustment.

The circular rack 19 on opposite sides engages with pinion rack sectors 20, 21 provided at the rear end of corresponding gripping arm members 22, 23 hingedly supported by the cylinder body 10 to rock around pivot pins 26, 27 orthogonally disposed on opposite side of the piston-rod 16 and coaxially arranged to said pinion racks 20, 21. As shown in the figure, each gripping member 22, 23 at its fore end is provided with a freely rocking jaw member 24, 25 for gripping objects or pieces to be manipulated and disposed between them. The two gripping member 22, 23 are removably hinged to two lateral guiding and supporting plate members 28, 29 removably attached to the front end of the body 10 of the cylinder by screw means 30 screwed into corresponding threaded holes normally provided in standard pneumatic cylinders. More precisely, as shown in the attached drawing, the pins 26, 27 for hinging the gripping members 22, 23 are freely disposed into a through hole at the rear end of the gripping member, with both ends of said pin 26 and 27 protruding into axially aligned dead holes into facing sides of the lateral plate members 28, 29. Therefore the gripping members 22, 23 may be disassembled by removing one of the two plate members 28, 29, and simply withdrawing the corresponding pivot pin 26, 27 from the through hole of the same gripping member which automatically disengages the circular rack 19.

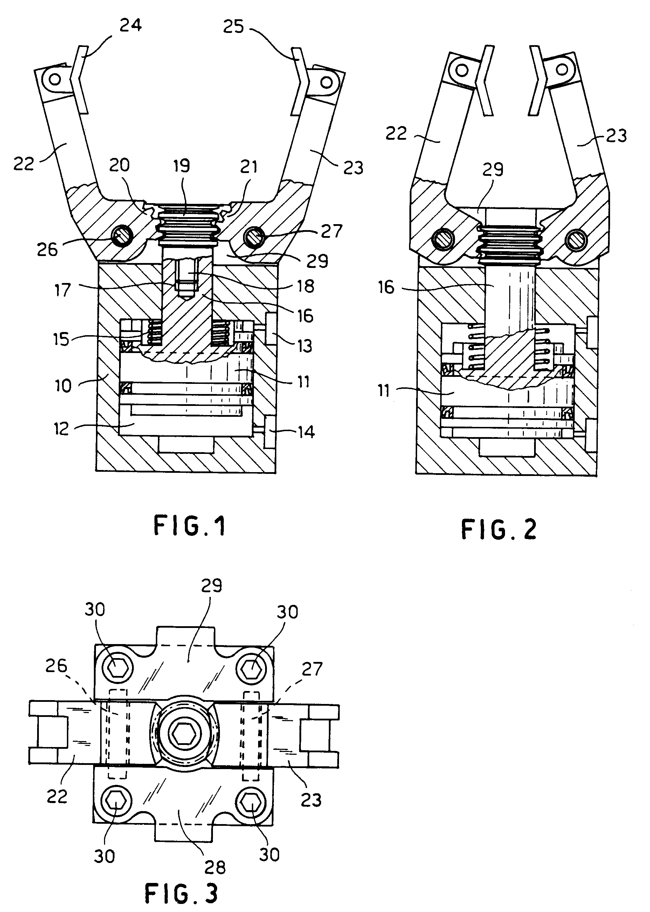

The two lateral plate members 28, 29, as shown in Fig. 3 are provided also with guiding surface means for guiding the gripping members 22, 23 during their pivotal movement. To this purpose the facing sides of the two lateral plate members 28 and 29 and gripping members 22, 23 are provided with flat contacting surfaces defining suitable guiding means for hinging the gripping members 22 and 23.

The use of a circular rack 19 and of gripping members 22, 23 having pinion rack sectors 20, 21 coaxially arranged to spaced apart pivot pins 26, 27 orthogonal to the axis of rack 19 and piston-rod 16 of the control cylinder 10, enables above all total closure of the pliers with a substantially constant gripping force, irrespective of the angular disposition which said gripping members 22 and 23 assume in gripping a piece to be manipulated. Furthermore the hinging of the gripping members 22 and 23 by lateral plates 28, 29 simply screwed to the body 10 of the cylinder, enables extremely simplified and rapid operations both when assembling and when disassembling the gripping device, for example for the removal or replacement of pre-existing gripping means with gripping means of another type. As stated above, this can be carried out simply by removing one of the plates to withdraw pins 26 and 27, and replacing the two existing gripping members with others even of a different type.

The linear configuration of the gripping members 22 and 23 and their scissor like movement, through the simple actuation of a circular rack, also allow easy application of external extensions (not shown) to each individual member 22, 23 so as to arrange gripping points of jaw members 24, 25 further spaced apart, by applying the same tightening force supplied by the pneumatic control cylinder.

From what has been said and shown in the accompanying drawing it is therefore clear that a pneumatically actuated mechanical gripping device has been provided, of extreme simplicity and great efficacy, which can be made with a few standardised construction parts, and which may be easily assembled or disassembled by the user himself for normal maintenance work, or for other purposes, without therefore requiring interventions by a technician. The extremely short stroke of the drive rack 19 enables a scissor like movement within a wide opening angle of the jaws at the same time restricting the overall dimensions of the entire gripping device.

## Claims

1. A gripping device of the type comprising: opposite gripping members (22, 23) pivotally supported by the body portion of a control cylinder (10) to rotate between closed and open conditions;
a pneumatically actuated control cylinder (10) having a piston chamber (12) and a piston member (11) reciprocable in said piston chamber (12), and piston-rod (16) operatively connected to the gripping member by rack means (19, 20, 21),
characterised in that said rack means comprises a circular rack member (19) at the fore end of the piston-rod (16), said circular rack (19) engaging with pinion-rack sectors (20, 21) provided at the rear portion of the gripping members (22, 23) of the gripping device, each of said pinion rack sectors (20, 21) being coaxially disposed in respect to a pivot pin (26, 27) orthogonally arranged in respect to the circular rack member (19) of the device;
said pivot pins (26, 27) and said gripping members (22, 23) being disengagably provided between spaced apart supporting plate members (28, 29), said supporting plate members (28, 29) being removably fastened to the body of the control cylinder (10) by screw means (30) and guiding means on facing surfaces of said plate members (28, 29) and rack sectors (20, 21) of the gripping members (22, 23) of said gripping device.

2. A gripping device according to Claim 1, characterised in that said pivot pins (26, 27) are freely threaded into a trhough hole of the gripping members and dead holes axially aligned in the plate members (28, 29) for rotatably supporting the gripping members (22, 23) of the device.

3. A gripping device according to Claims 1 or 2, characterised in that said circular rack member (19) comprises a threaded shank portion (18) removably screwed into a threaded hole axially extending in the piston-rod (16) of the control cylinder (10) of the gripping device.
